Europäisches Patentamt

European Patent Office

Office européen des brevets

(11) Veröffentlichungsnummer: **0 324 876**

**A1**

## (12) EUROPÄISCHE PATENTANMELDUNG

(21) Anmeldenummer: **88100807.2**

(22) Anmeldetag: **20.01.88**

(51) Int. Cl.⁴: **F02N 17/00**

(43) Veröffentlichungstag der Anmeldung:
**26.07.89 Patentblatt 89/30**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sandor, Dr. Dipl.-Ing.**
**Petöfi u. 59**
**H-3102 Salgotarjan Baglyasalja(HU)**
Erfinder: **Töröcsik, Laszlo, Dipl.-Ing.**
**Kakukk u. 10/b**
**H-1126 Budapest(HU)**
Erfinder: **Valoczi, György, Dipl.-Ing.**
**Budapesti u. 40**
**H-3104 Salgotarjan(HU)**
Erfinder: **Toth, Istvan**
**Kistarjan u. 8**
**H-3100 Salgotarjan(HU)**

(74) Vertreter: **Patentanwälte Viering & Jentschura**
**Steinsdorfstrasse 6**
**D-8000 München 22(DE)**

(54) **System zum Anlassen des Motors von mit hydromechanischem automatischen Wechselgetriebe und Druckluftsystem versehenen Strassenkraftfahrzeugen durch Anschieben.**

(57) System zum Anlassen des Motors von mit hydromechanischem automatischen Wechselgetriebe und Druckluftsystem versehenen Straßenkraftfahrzeugen durch Anschieben. Das Kraftfahrzeug weist einen Verbrennungsmotor (12), ein von diesem angetriebenes, einen hydrodynamischen Drehmomentwandler, eine diesen kurzschließende Reibkupplung und Gangstufenelemente enthaltendes hydrodynamisches automatisches Wechselgetriebe (3), ein dessen Betrieb steuerndes elektromagnetisches Ventilsystem (4) und ein einen Luftbehälter (14) enthaltendes Druckluftsystem (5) auf. Gemäß der Erfindung ist ein hydropneumatischer Zylinder (7) vorgesehen, dessen Hydraulikraum (8) mit der Speiseseite der hydraulischen Armaturen des elektromagnetischen Ventilsystems (4) des automatischen Wechselgetriebes (3) unmittelbar verbunden ist, während sein Pneumatikraum (9) über ein elektromagnetisches Ventil (6) mit dem Druckluftsystem (5) des Kraftfahrzeuges verbunden ist. Der Elektromagnet des elektromagnetischen Ventils (6) ist an einen Ausgang einer Steuereinheit (2) angeschlossen, während an den anderen Ausgängen der Steuereinheit (2) die Elektromagnete der die Reibkupplung des automatischen Wechselgetriebes (3) einkuppelnden und die Anschiebegangstufe schaltenden elektomagnetischen Ventile angeschlossen sind und am Eingang der Steuereinheit (2) ein elektrischer Handschalter (1) angeschlossen ist.

Fig 1

## System zum Anlassen des Motors von mit hydromechanischem automatischen Wechselgetriebe und Druckluftsystem versehenen Straßenkraftfahrzeugen durch Anschieben

Die Erfindung bezieht sich auf ein System, das ermöglicht, daß der Motor eines mit hydromechanischem automatischen Wechselgetriebe versehenen Straßenkraftfahrzeugs durch Anschieben oder Anschleppen des Kraftfahrzeuges angelassen werden kann.

Wie bekannt, ist bei den hydromechanischen automatischen Wechselgetrieben zur Einschaltung sowohl des hydrodynamischen Drehmomentwandlers als auch der kurzschließenden Reibkupplung und der einzelnen Gangstufen Hydraulikflüssigkeit entsprechenden Druckes erforderlich. Dies wird durch die in das automatische Wechselgetriebe eingebaute Pumpe gewährleistet, die aber nur in demjenigen Fall Flüssigkeit fördert, wenn der Motor läuft. So kann der Motor durch Anschieben oder Anschleppen des Kraftfahrzeuges nicht angelassen werden.

Dieses Problem wurde bei anspruchsvolleren Fahrzeugen derart gelöst, daß an die Antriebswelle des automatischen Wechselgetriebes eine zweite Pumpe eingebaut wurde, welche das hydraulische System des automatischen Wechselgetriebes beim Anschieben mit Hydraulikflüssigkeit versorgt, so daß der Motor angelassen werden kann. Diese Lösung hat den Nachteil, daß sie bedeutende Mehrbauteile erfordert.

Zielsetzung der Erfindung ist, zur Lösung des Problems ein wesentlich einfacheres System zu schaffen, zumindest bei einem Teil der Kraftfahrzeuge. Schwerfahrzeuge verfügen im allgemeinen über ein Druckluftsystem, das eine bestimmte Menge Energie ständig speichert. Mit dieser Energie kann im Hydrauliksystem des automatischen Wechselgetriebes ein so hoher Druck erzeugt werden, der die zum Anlassen durch Anschieben nötigen Schaltungen zustandebringt.

Die Erfindung ist also eine Anordnung zum Anlassen des Motors eines Straßenkraftfahrzeuges durch Anschieben, wobei das Kraftfahrzeug einen Verbrennungsmotor, ein von diesen angetriebenes, einen hydrodynamischen Drehmomentwandler, eine diesen kurzschließende Reibkupplung und Gangstufenelemente enthaltendes hydrodynamisches automatisches Wechselgetriebe, ein dessen Betrieb steuerndes elektromagnetisches Ventilsystem und ein einen Luftbehälter enthaltendes Druckluftsystem aufweist und die Anordnung derart ausgebildet ist, daß sie einen hydropneumatischen Zylinder aufweist, dessen Hydraulikraum unmittelbar mit der Speiseseite der hydraulischen Armaturen des elektromagnetischen Ventilsystems des automatischen Wechselgetriebes verbunden ist, während sein Pneumatikraum über ein elektromagnetisches Ventil mit dem Druckluftsystem des Kraftfahrzeugs verbunden ist und der Elektromagnet des erwähnten elektromagnetischen Ventils an einen Ausgang einer Steuereinheit angeschlossen ist und an den anderen Ausgängen der Steuereinheit die Elektromagneten der die Reibkupplung des automatischen Wechselgetriebes einkuppelnden und die Anschiebegangstufe schaltenden elektromagnetischen Ventile angeschlossen sind, während am Eingang der Steuereinheit ein elektrischer Handschalter angeschlossen ist.

Bei einer bevorzugten Ausführungsform der erfindungsgemäßen Anordnung steht die Hauptwelle des Motors mit einem Winkelgeschwindigkeitssignalgeber in Antriebsverbindung, der an einem Eingang der Steuereinheit angeschlossen ist.

Bei einer weiteren bevorzugten Ausführungsform der erfindungsgemäßen Anordnung steht die Antriebswelle des automatischen Wechselgetriebes mit einem Winkelgeschwindigkeitssignalgeber in Antriebsverbindung, der an einem weiteren Eingang der Steuereinheit angeschlossen ist.

Die Erfindung wird nachstehend anhand eines Ausführungsbeispiels mit Hilfe der Zeichnung näher erläutert. Es zeigen:

Fig. 1 - das Schema der erfindungsgemäßen Anordnung

Fig.2 - die Schaltungsanordnung der Steuereinheit.

Durch die Anwendung der Erfindung wurde ein derartiger städtischer Autobus zum Anlassen durch Anschieben fähig gemacht, dessen automatisches Wechselgetriebe drei Vorwärtsgangstufen aufweist. Im Falle eines derartigen automatischen Wechselgetriebes kann der Motor durch Anschieben angelassen werden, wenn die II. Gangstufe eingeschaltet ist. In unserem Fall ist also die II. Gangstufe die Anschiebegangstufe.

Hier soll bemerkt werden, daß es von der Anzahl der Vorwärtsgangstufen des automatischen Wechselgetriebes abhängig ist, welche derselben als Anschiebegangstufe geeignet ist. Wie bekannt, reicht bei zu niedriger Gangstufe die Reibung zwischen den Rädern und der Straßenfläche zum Bewegen des Motors nicht aus.

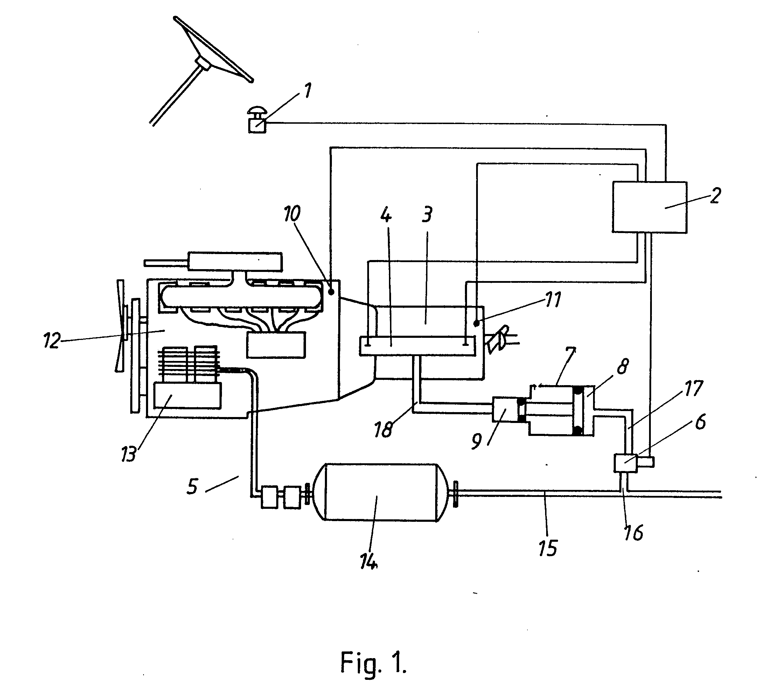

Wie aus Fig. 1 ersichtlich, wird der Autobus von einem Motor 12 angetrieben, der ein Sechszylinder-Verbrennungsmotor mit Diesel-Betrieb ist. Am Motor 12 ist ein hydromechanisches automatisches Wechselgetriebe 3 angeschlossen. Die Gangstufen des automatischen Wechselgetriebes 3 sind über den eingebauten hydrodynamischen Drehmomentwandler mit der Hauptwelle des Motors 12 verbunden und der hydrodynamische Drehmomentwandler kann über eine ebenfalls eingebaute Reibkupplung kurzgeschlossen werden. Das Schalten der Gangstufen, des hydromdynamischen Drehmomentwandlers und der Reibkupplung wird von einem elektromagnetischen Ventilsystem 4 gesteuert, dessen hydraulischen Armaturen von einer im automatischen Wechselgetriebe eingebauten Pumpe mit Hydraulikflüssigkeit versorgt werden.

Zur Betätigung der Bremsen und anderer Armaturen des Autobusses ist ein Druckluftsystem 5 ausgebildet. Das Druckluftsystem 5 wird von einem von dem Motor 12 angetriebenen Kompressor 13 mit Überdruckluft gespeist. Die von dem Kompressor 13 geförderte Luft wird in einem Luftbehälter 14 gespeichert. Von einer an den Luftbehälter 14 angeschlossenen Leitung 15 ist eine Abzweigleitung 16 abgezweigt. (Die Beschreibung der weiteren Teile des Druckluftsystems ist aus dem Gesichtspunkt der Erfindung nicht erforderlich; deshalb sind solche Teile nicht dargestellt.)

An der Abzweigleitung 16 ist über eine Leitung 17 der Pneumatikraum 8 eines hydropneumatischen Zylinders 7 angeschlossen. In die Leitung 17 ist ein elektromagnetisches Ventil 6 eingeschaltet.

Der Hydraulikraum 9 des hydropneumatischen Zylinders 7 ist über eine Leitung 18 mit den hydraulischen Armaturen des elektromagnetischen Ventilsystems 4 des automatischen Wechselgetriebes 3 verbunden.

Zum Anlassen des Motors 12 durch Anschieben sollen die Anschiebegangstufe des automatischen Wechselgetriebes 3 und die Reibkupplung eingeschaltet und das elektromagnetische Ventil 6 betätigt werden. Dies wird mittels einer Steuereinheit 2 durchgeführt.

Dem Starten der Steuerung, das heißt der Erzeugung des Befehls des Fahrzeugfahrers, dient ein elektrischer Handschalter 1.

Zum schonenden Anlassen des Motors 12 ist es zweckmäßig, die Verbindung zwischen seiner Hauptwelle und der Antriebswelle des automatischen Wechselgetriebes 3 nur bei der Anschiebebewegung des Kraftfahrzeuges zustandezubringen und nach dem Anlassen zu lösen. Aus diesem Grund soll die Drehzahl der Hauptwelle des Motors 12 und der Antriebswelle des automatischen Wechselgetriebes gemessen werden. Es ist leichter, anstatt der Drehzahl der Hauptwelle des Motors 12 die Drehzahl der Steuerwelle zu messen. Hierzu ist ein Winkelgeschwindigkeitsignalgeber 10 eingebaut, der an den Eingang der Steuereinheit 2 angeschlossen ist. Die Abweichung zwischen den Drehzahlen der Hauptwelle und der Steuerwelle kann in der Steuereinheit 2 berücksichtigt werden.

An der Antriebswelle des automatischen Wechselgetriebes 3, genauer gesagt am dazu proportional rotierenden Stundengeschwindigkeitsantrieb, ist ein Winkelgeschwindigkeitsignalgeber 11 eingebaut, der ebenfalls an einen Eingang der Steuereinheit 2 angeschlossen ist, wo ebenfalls die Abweichung zwischen den Drehzahlen berücksichtigt werden kann.

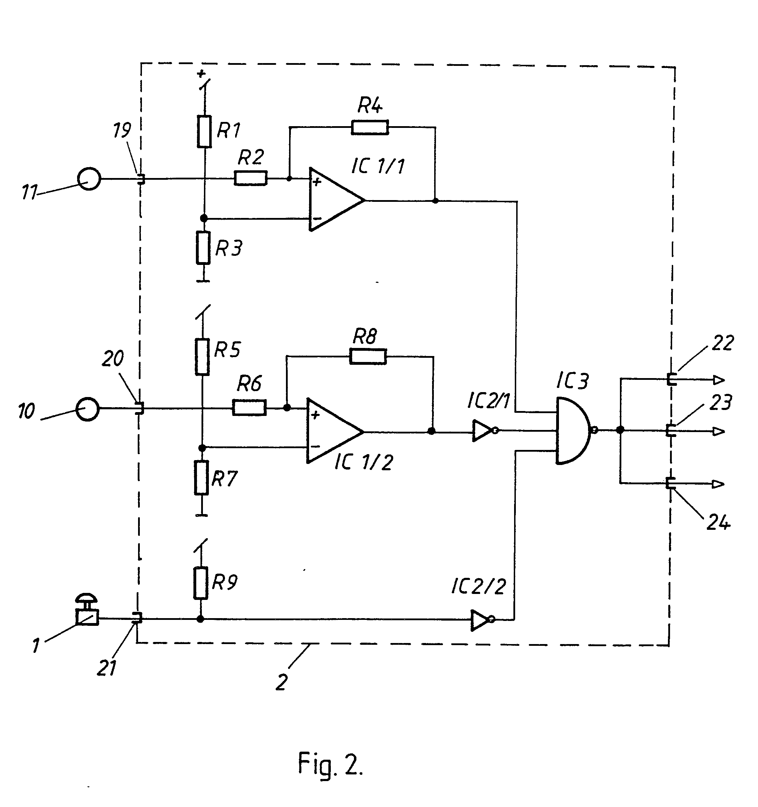

Eine mögliche Ausführungsform der Steuereinheit 2 ist in Fig. 2 dargestellt. Die eingebauten elektronischen Elemente sind mit den Benennungen nach dem IC-Katalog des Technischen Verlags bezeichnet: der die Operationsverstärker IC1/1, IC2/2 enthaltende Operationsverstärker IC1 vom Typ LM 324, der die Negatoreinheiten IC2/1, IC2/2 enthaltende Negator EC2 vom Typ SN 74 LS 06 und das NAND-Tor IC3 mit drei Eingängen vom Typ SN 74 LS 10.

Der das Signal des Winkelgeschwindigkeitssignalgebers 11 empfangende Eingang 19 der Steuereinheit 2 ist über einen Widerstand R2 an den einen Eingang des Operationsverstärkers IC1/1 angeschlossen. Dieser Eingang ist mittels einer einen Widerstand R4 enthaltenden positiven Rückkopplung auch mit dem Ausgang des Operationsverstärkers IC1/1 verbunden. Am anderen Eingang des Operationsverstärkers IC1/1 ist ein aus Widerständen R1 und R3 bestehender Spannungsteiler angeschlossen.

Der Eingang 20 der Steuereinheit empfängt das Signal des Winkelgeschwindigkeitssignalgeber 10. Der Eingang 20 ist über einen Widerstand R6 an den einen Eingang des Operationsverstärkers IC1/2 angeschlossen, der mittels einer den Widerstand R8 enthaltenden positiven Rückkopplung auch mit dem Ausgang des Operationsverstärkers IC1/2 verbunden ist. Der andere Eingang des Operationsverstärkers IC1/2 ist mit dem aus Widerständen R5 und R7 bestehenden Spannungsteiler verbunden.

Der Ausgang des Operationsverstärkers IC1/1 ist unmittelbar an den einen Eingang des NAND-Tors IC3 mit drei Eingängen angeschlossen, während der Ausgang des Operationsverstärkers IC1/2 über die Negatoreinheit IC2/1 an den zweiten Eingang des NAND-Tors IC3 angeschlossen ist. An den dritten Eingang des NAND-Tors ist über die Negatoreinheit IC2/2 der Eingang 21 der Steuereinheit 2 angeschlossen, der über einen Widerstand 9 auch an den positiven Pol der Speisespannungsquelle angeschlossen ist. Der Eingang 21 empfängt das Signal des elektrischen Handschaltes 1.

Der Ausgang des NAND-Tors IC3 mit drei Eingängen ist an den Ausgängen 22, 23 und 24 der Steuereinheit 2 angeschlossen. Über je einen nicht dargestellten Leistungsverstärker sind der Ausgang 22 an den Elektromagneten der die Reibkupplung des automatischen Wechselgetriebes 2 einschaltenden elektromagnetischen Ventile angeschlossen, der Ausgang 23 an den Elektromagneten der die Anschiebegangstufe einschaltenden elektromagnetischen Ventile angeschlossen und der Ausgang 24 an den Elektromagneten des elektromagnetischen Ventils 6 angeschlossen.

Die erfindungsgemäße Einrichtung funktioniert wie folgt.

Wenn der Fahrzeugfahrer gezwungen ist, den Motor des Kraftfahrzeuges durch dessen Anschieben anzulassen, übermittelt er durch Drücken des elektrischen Handschalters 1 ein Signal an den Eingang 21 der Steuereinheit 2.

Jetzt erzeugt der Winkelgeschwindigkeitssignalgeber 10 des Motors 12 noch kein Signal, aber hiner der Negatoreinheit IC2/1 erscheint ein Signal.

Wenn die Geschwindigkeit des angeschobenen Kraftfahrzeuges die erforderliche Höhe erreicht, erzeugt das NAND-Tor IC3 mit drei Eingängen aufgrund des Signals des Winkelgeschwindigkeitsgebers 11, des Signals am Ausgang der Negatoreinheit IG2/1 und des Signals des elektrischen Handschalters ein Ausgangssignal, welches über die Ausgänge 22, 23 und 24 zu dem entsprechenden Elektromagneten des elektromagnetischen Ventilsystems 4 des automatischen Wechselgetriebes und zum Elektromagneten des elektromagnetischen Ventils 6 gelangt.

Das elektromagnetische Ventil 6 verbindet den Verteiler 16 des Druckluftsystems 5 mit dem pneumatischen Raum 8 des hydropneumatischen Zylinders 7. Jetzt strömt die im Luftbehälter gespeicherte Druckluft in den Pneumatikraum 8 und drückt aus dem Hydraulikraum 9 die Hydraulikflüssigkeit aus, die zu den hydraulischen Armaturen des elektromagnetischen Ventilsystems 4 strömt.

Die entsprechenden Ventile des elektromagnetischen Ventilsystems 4 schalten auf Wirkung des aus der Steuereinheit 2 ankommenden Signals mit Hilfe der aus dem Hydraulikraum 9 ankommenden Hydraulikflüssigkeit die II. Gangstufe, die in unserem Fall die Anschiebegangstufe ist, und die Reibkupplung ein. Dadurch ist zwischen der Hauptwelle des Motors 12 und der Antriebswelle des automatischen Wechselgetriebes 3 eine feste Verbindung entstanden. Während des weiteren Anschiebens des Kraftfahrzeuges bringen die Fahrzeugräder die Hauptwelle des motors 12 in Drehung, der in dieser Weise durch das Anschieben angelassen werden kann.

Wenn der Motor 12 tatsächlich angelassen ist, nimmt seine Drehzahl zu. Jetzt soll die Verbindung zwischen den Rädern und der Hauptwelle des Motors 12 gelöst werden. Deshalb wird bei einem vorbestimmten Wert der Motordrehzahl das Signal am Ausgang der Negatoreinheit IC2/1 durch das Signal des Winkelgeschwindigkeitssignalgebers 10 verändert, womit das Signal am Ausgang des NAND-Tors IC3 mit drei Eingängen erlischt, und sowohl die eingeschalteten Elektromagnete des elektromagnetischen Ventilsystems 4, als auch der Elektromagnet des elektromagnetischen Ventils 6 gelangen in den spannungsfreien Zustand. Dadurch werden die Reibkupplung gelöst und die II. Gangstufe ausgeschaltet und das elektromagnetische Ventil entleert den Pneumatikraum 8. In dieser Weise wird die Verbindung zwischen dem Motor 12 und den Rädern unterbrochen und die Hauptwelle kann frei rotieren.

Die oben beschriebene Ausführungsform ist die bevorzugte Ausführungsform der Erfindung, weil weder das Zustandebringen noch das Lösen der Verbindung zwischen der Hauptwelle und den Rädern dem Fahrzeugfahrer überlassen ist.

Bei der einfachsten Ausführungsform können die Winkelgeschwindigkeitssignalgeber weggelassen werden. Hier soll das Zustandebringen der Verbindung mittels des elektrischen Handschalters durchgeführt werden, und das Lösen der Verbindung kann ebenfalls mit dem elektrischen Handschalter, oder mittels Leergangschaltung des Gangwählschalters (Kontroller) erfolgen.

Da das Lösen der Verbindung zwischen der Hauptwelle und den Rädern kritisch ist, ist bei einer anspruchsvolleren Ausbildung der am Motor eingebaute Winkelgeschwindigkeitssignalgeber auf jeden Fall erforderlich.

Aus den obigen Ausführungsformen ist ersichtlich, daß die Winkelgeschwindigkeitssignalgeber nicht unbedingt unmittelbar bei demjenigen Bauteil angeordnet werden müssen, dessen Drehzahl aus dem Gesichtspunkt der Steuerung charakteristisch ist. Aufgrund dessen soll hier angemerkt werden, daß das Signal desjenigen Winkelgeschwindigkeitssignalgebers, der bei der Antriebswelle des automatischen Wechselgetriebes angeordnet ist, beispielsweise durch das Signal derartiger Winkelgeschwindigkeitssignalgeber ersetzt werden kann, die in den Kraftfahrzeugen zum Antiblockierungs-Bremssystem eingebaut sind.

Über die Durchführung der zum Ziel gesetzten Aufgabe hinaus kann die Erfindung auch in einem speziellen Fall vorteilhaft verwendet werden. Bei einem Teil der automatischen Wechselgetriebe ist die Antriebswelle in der Parkstellung mechanisch gesperrt. Wenn dies nicht der Fall ist, kann die Sicherheit des Parkzustandes des Kraftfahrzeuges durch Einschalten des elektrischen Handschalters erhöht werden. Hier wird nämlich die Steuereinheit auf Wirkung einer Bewegung des Kraftfahrzeuges die zum Anlassen nötigen Operationen durchführen, aber wegen Mangel an Kraftstoffversorgung wird sich die Bremswirkung des Motors bemerkbar machen.

**Ansprüche**

1. Anordnung zum Anlassen des motors (12) eines Straßenkraftfahrzeuges durch Anschieben desselben, wobei das Kraftfahrzeug einen Verbrennungsmotor (12), ein von diesem angetriebenes, einen hydrodynamischen Drehmomentwandler, eine diesen kurzschließende Reibkupplung und Gangstufenelemente enthaltendes hydrodynamisches automatisches Wechselgetriebe (3), ein dessen Betrieb steuerndes elektromagnetisches Ventilsystem (4) und ein einen Luftbehälter (14) enthaltendes Druckluftsystem (5) aufweist, dadurch gekennzeichnet, daß ein hydropneumatischer Zylinder (7) vorgesehen ist, dessen Hydraulikraum (8) mit der Speiseseite der hydraulischen Armaturen des elektromagnetischen Ventilsystems (4) des automatischen Wechselgetriebes (3) unmittelbar, und dessen Pneumatikraum (9) über ein elektromagnetisches Ventil (6) mit dem Druckluftsystem (5) des Kraftfahrzeuges verbunden sind, und daß der Elektromagnet des elektromagnetischen Ventils (6) an einen Ausgang (24) einer Steuereinheit (2) angeschlossen ist, während an den anderen Ausgängen (22, 23) der Steuereinheit (2) die Elektromagnete der die Reibkupplung des automatischen Wechselgetriebes (3) einkuppelnden und die Anschiebegangstufe schaltenden elektromagnetischen Ventile angeschlossen sind und am Eingang (21) der Steuereinheit (2) ein elektrischer Handschalter (1) angeschlossen ist.

2. Anordnung nach Anspruch 1, dadurch gekennzeichnet, daß die Hauptwelle des Motors (12) mit einem Winkelgeschwindigkeitssignalgeber (10) in Antriebsverbindung steht, der am Eingang (20) der Steuereinheit (2) angeschlossen ist.

3. Anordnung nach Anspruch 1 oder 2, dadurch gekennzeichnet, daß die Antriebswelle des automatischen Wechselgetriebes (3) mit einem Winkelgeschwindigkeitssignalgeber (11) in Antriebsverbindung steht, der an einem zusätzlichen Eingang (19) der Steuereinheit (2) angeschlossen ist.

EP 0 324 876 A1

Fig. 1.

EP 0 324 876 A1

Fig. 2.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 469 313 (VOLKSWAGENWERK) * Seite 2, Zeilen 8-12; Seite 6, Zeile 15 - Seite 7, Zeile 18, Zeilen 29-31; Seite 8, Zeilen 11-17; Figur 3 * | 1-3 | F 02 N 17/00 |
| A | DE-A-3 126 885 (VOLKSWAGENWERK) * Seite 4, Zeilen 14-20; Seite 5, Zeile 28 - Seite 6, Zeile 19; Seite 9, Zeilen 3-18; Figur * | 1-3 | |
| A | M.T.Z. MOTORTECHNISCHE ZEITSCHRIFT, Band 47, Nr. 5, Mai 1986, Seiten 199-205, Stuttgart, DE; R.G. REPPERT: "Automatikgetriebe für schwere Radfahrzeuge der Baureihe HS von Renk" * Seite 200, mittlere Spalte, Zeile 2 - rechte Spalte, Zeile 5; Seite 204, mittlere Spalte, Zeile 17 - rechte Spalte, Zeile 11; Figur 9 * | 1 | |

**RECHERCHIERTE SACHGEBIETE (Int. Cl.4)**

F 02 N
F 16 H
B 60 K

Der vorliegende Recherchenbericht wurde für alle Patentansprüche erstellt

| Recherchenort | Abschlußdatum der Recherche | Prüfer |
|---|---|---|
| DEN HAAG | 19-09-1988 | CLASEN M.P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument